# EUROPEAN PATENT APPLICATION

(11) **EP 4 604 037 A1**
(43) Date of publication of application: **20.08.2025**
(21) Application number: 25156911.7
(22) Date of filing: 10.02.2025
(51) Int. Cl.: G06Q 10/087, G06Q 50/12, B65D 23/14, G09F 3/02

(54) **SYSTEM AND METHOD FOR TRACKING THE DISTRIBUTION OF A COSMETIC PRODUCT AND THE USE OF THE CONTAINERS FOR A COSMETIC PRODUCT**

(30) Priority: 12.02.2024 IT 202400002917
(71) Applicant: GFL S.A., 6900 Lugano (CH)
(72) Inventor: ROSSI, Luigi, 6900 Lugano (CH)
(74) Representative: Gualeni, Nadia

(57) **Abstract**

A tracking system (1) of the distribution of a consumable product, comprising a main container (2) having a main volume to contain or containing a stock of consumable product, and at least one secondary container (3) having a secondary volume to contain or containing a consumable product, wherein the secondary volume is smaller than the main volume of the main container.

The main container (2) also comprises a tracking device (4) comprising at least one recognition element (45) provided with a recognition code (43) which identifies the consumable product.

The recognition element (45) is engaged separably with the main container (2) and is configured or configurable to engage the secondary container (3) when it is disengaged from the main container (2).

## Description

The present invention relates to a system for tracking the distribution of a consumable product. Furthermore, the invention relates to a method for tracking the distribution of a consumable product. Furthermore, the invention relates to a method for tracking the components of the tracking system.

In the pharmaceutical sector, drug tracking systems are known. US 2002/093189 A1 describes a container with a label that bears half of the identification code of a medicine; when the medicine is administered, the person administering the medicine prints the medical prescription, detaches the second half of the identification code from it and applies it to the container in such a way that the two halves are adjacent and the entire code is readable by an electronic reader to confirm the correctness of the medicine to be administered. The document "Multi-flag Medication Barcode Labels" shows an insulin container with a plurality of labels indicating the batch of insulin, labels that can be detached from the container to be applied to the sterile single-dose syringe with which the medicine is administered. All these systems therefore concern disposable containers, containers that are non-refillable and non-reusable for safety and hygiene reasons.

On the contrary, the present invention finds application in public or private environments, such as industrial environments, offices, or hotels, in which containers are provided for the distribution of a consumable product. The present invention finds preferred application in the field of distribution of cosmetic products. The term "consumable product" refers to a product intended to be used or consumed, for example a powdered or granular product or a pasty product or a liquid or fluid product. For example, "consumable product" means a sanitizing liquid, a detergent, a liquid soap, a foam bath, a shampoo, a cream, or other cosmetic products.

In accordance with the ecological principles for reducing waste from plastics and the carbon footprint, which are nowadays incorporated into common consumer practice and, in some aspects, standardized according to law, containers for consumable products must be reused and, to this end, periodically filled.

In such circumstances, one or more containers are filled with a consumable product coming in turn from another container having the function of a reservoir of consumable product, typically having a volume greater than the volume of the container to be filled.

Specifically, the distribution chain of consumable product provides for the storage of a stock of consumable product upstream by means of a main container, and a distribution of consumable product intended for the downstream end user by means of one or more secondary containers. The consumable product is distributed from the main container to the at least one secondary container by means of operations for refilling the secondary container, for example by means of manual operations carried out by a special operator. Therefore, the secondary container is intended to perform a predefined filling cycle, for example following substantial emptying or after a certain time interval or after a predefined number of distribution cycles of consumable product to the end user. By way of example, the main container is made of a cellulose-based material or a plastics material, for example one made of a rigid material or a flexible-walled packaging.

In the discussion, "end user" means the user who uses or consumes the consumable product, for example to cleanse or disinfect parts of their body.

In the discussion, "distribution" aimed at the end user means dispensing, dosing, pouring, spraying, or nebulization intended for use or consumption by the end user.

One of the problems that occur in environments in the sector is the inability to track, over time, the origin of the consumable product being refilled in a given container in a certain and reliable manner.

This aspect is of critical importance in cases where the end user develops issues attributable to the consumable product, for example in the case of the end user experiencing an allergic reaction or in the case of contamination during distribution operations between the containers or in the case of a child accidentally ingesting the consumable product.

In addition, industry regulations formally require monitoring of the consumable product, particularly of the nature and distribution of the consumable product. In the field of cosmetics, for example, regulation 1223/2009 requires traceability of the production batch.

The sector has encountered difficulties in ensuring the traceability of the consumable product in a certain manner. Similarly, the sector has found it difficult to monitor, in a simple and effective manner, the use and useful life of the containers and components used to distribute a consumable product.

The object of the present invention is to present a tracking system and a method for tracking the distribution of the consumable product that solve the problems mentioned above.

An object of the present invention is to provide a tracking system that allows the distribution of consumable product between the containers to be monitored effectively and reliably.

An object of the present invention is to offer to the operators tasked with refilling with consumable product a structurally simple tracking system and a tracking method that is intuitive and easily repeatable on a large scale.

Another object of the present invention is to provide a tracking system and method by which it is possible to comply with legal obligations.

An object of the present invention is to monitor in a certain manner the life cycle of the containers as a function of the number of uses.

These and other objects are achieved by a system for tracking the distribution of the consumable product according to claim 1 and a method for tracking the distribution of the consumable product according to claim 10. The claims dependent on these refer to preferred embodiments involving additional beneficial technical effects.

The present invention is described below with the aid of the accompanying drawings, wherein:

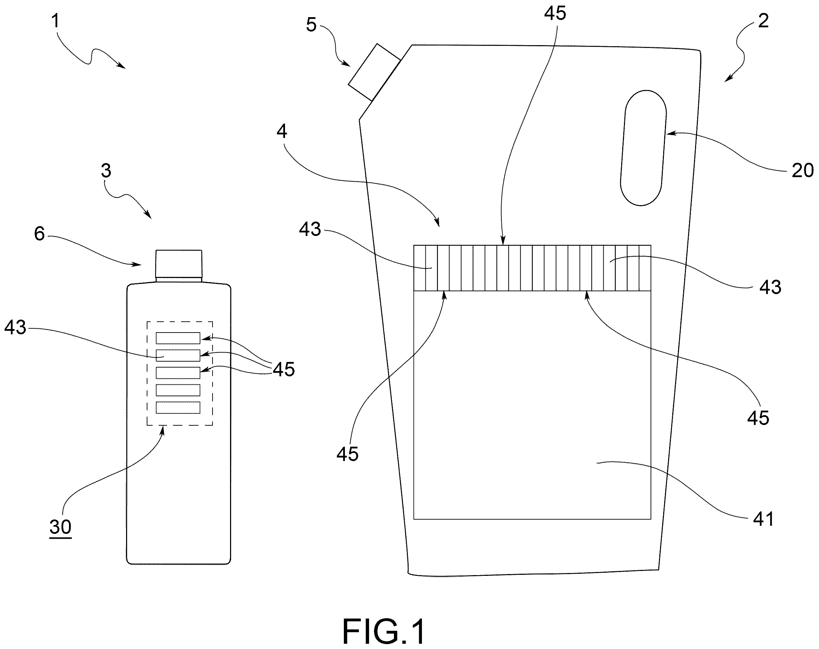

- Fig. 1 shows a tracking system in accordance with the present invention, according to an embodiment;

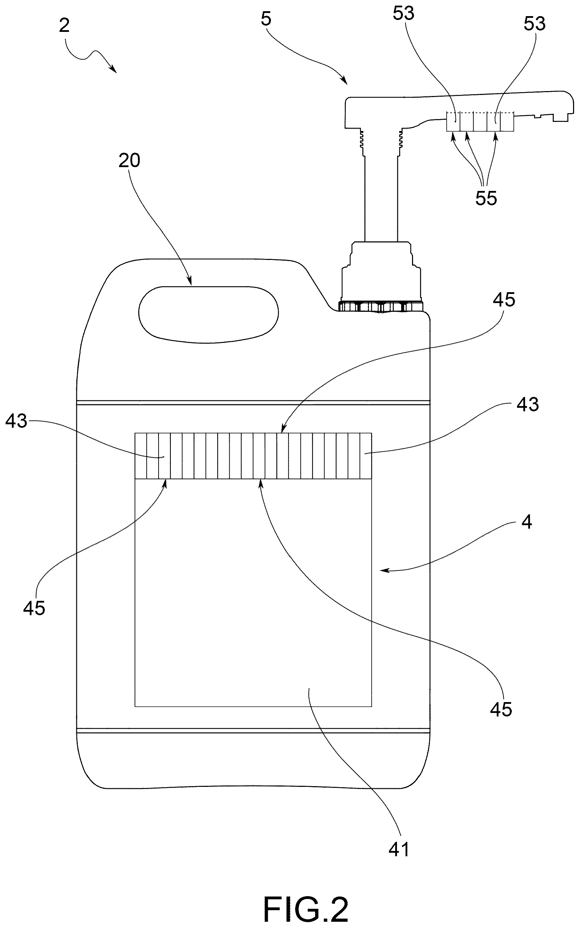

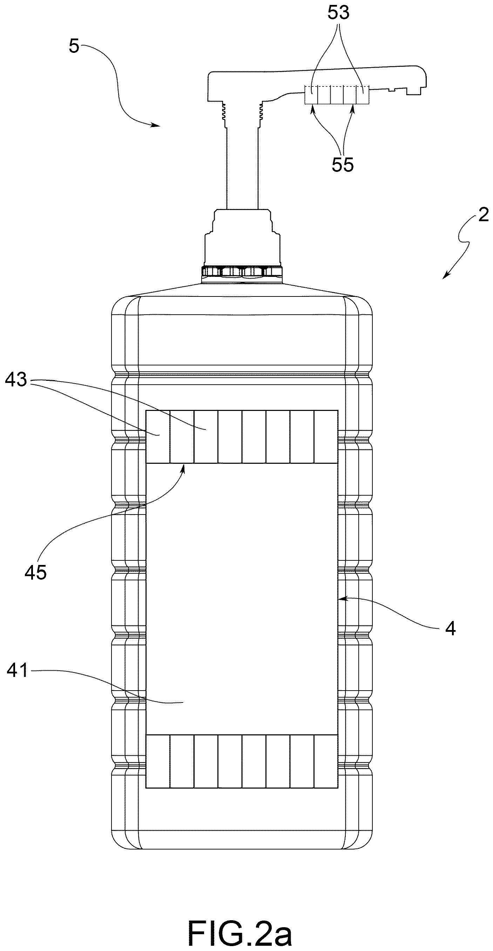

- Fig. 2 and 2a show a main container of the tracking system, respectively in two further embodiments;

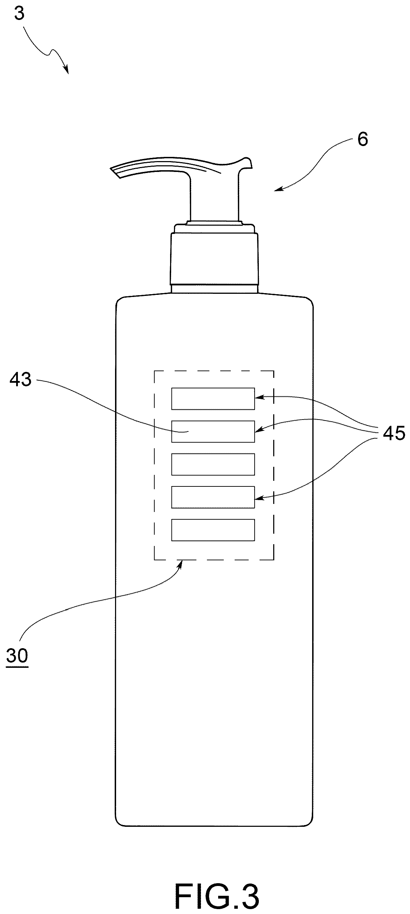

- Fig. 3 shows a secondary container of the tracking system, in a further embodiment;

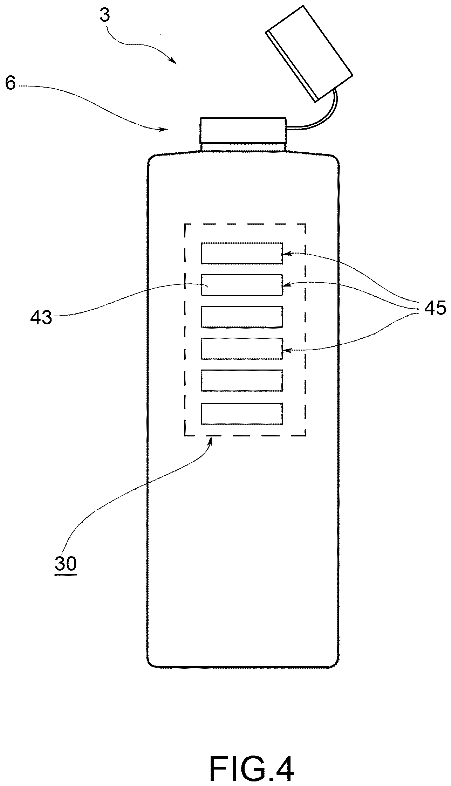

- Fig. 4 shows a secondary container of the tracking system, in a further embodiment;

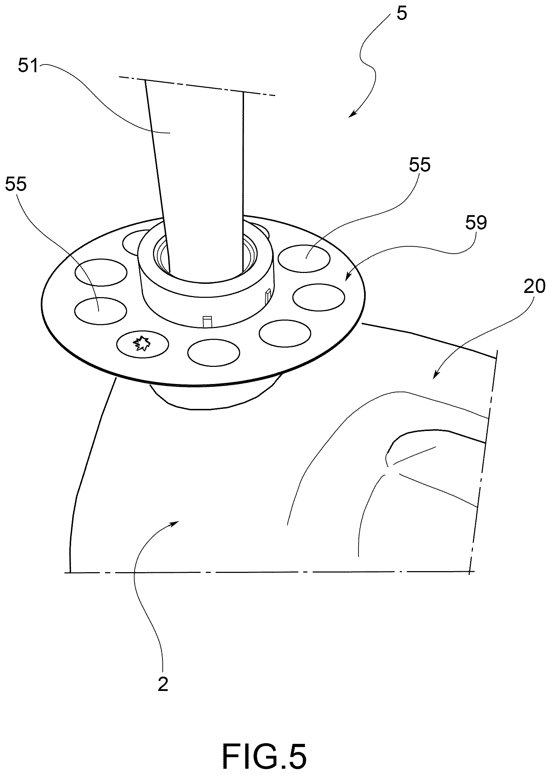

- Fig. 5 shows a main distribution device in a further embodiment.

In the figures, the reference numeral 1 overall indicates a system for tracking the distribution of consumable product. The present invention finds preferred application in the field of distribution of cosmetic products; therefore, the consumable product is a cosmetic product. The term "cosmetic" refers to products (in the form of liquid, fluid, cream, gel, lotion, emulsion) for cleansing, perfuming, hydrating the skin, body, face, hair, such as detergents, sanitizers, soaps, bubble bath, shower gel, shampoo, conditioners, perfumes, face and body creams.

According to the invention, the tracking system 1 comprises a main container 2 which comprises a tracking device 4.

The main container 2 is provided with a main chamber having a main volume for containing consumable product.

In one embodiment, consumable product may be contained in the main chamber.

In one embodiment, consumable product is contained in the main chamber.

The main container 2 contains or is suitable for containing a stock of consumable product in the main chamber.

"Stock" means a reserve quantity intended to be stored in a special environment, typically sheltered from humidity, heat, and light sources, and intended to fill secondary containers.

In one embodiment, the main volume is between 0.8 liters and 1000 liters, preferably between 1 and 50 liters, even more preferably between 1.5 and 15 liters, for example approximately 10 liters.

In one embodiment, the main volume is approximately1 liter or approximately 5 liters.

In one embodiment, the main container is a Pallecon.

In one embodiment, the tracking system comprises a secondary container 3 provided with a secondary chamber having a secondary volume to contain a consumable product to be distributed to the end user.

In one embodiment, consumable product may be contained in the secondary chamber.

In one embodiment, consumable product is contained in the secondary chamber.

The secondary container 3 contains or is suitable for containing consumable product to be distributed to the end user.

In one embodiment, the secondary volume is between 0.1 liters and 5 liters, preferably between 0.25 and 2.5 liters, even more preferably between 0.5 and 1 liter, for example approximately 0.66 liters or 0.75 liters.

According to the invention, the secondary volume is smaller than the main volume.

In one embodiment, the main volume is smaller than the secondary volume. This embodiment, for example, finds preferred application in the case in which the consumable product contained in the main chamber of the main container is a highly concentrated type and intended to be diluted, for example mixed with water inside the secondary chamber of the secondary container.

In one embodiment, the main volume is an integer multiple of the secondary volume. In other words, the secondary volume is an integer submultiple of the main volume.

In one embodiment, the tracking system 1 comprises a plurality of secondary containers 3.

In one embodiment, the secondary containers 3 of said plurality of secondary containers 3 all have the same secondary volume.

In one embodiment, all or some secondary containers 3 of said plurality of secondary containers 3 have different secondary volumes from each other. In the most common situation of use, the product contained in the main container becomes depleted as a result of a variable and non-predefined number of filling cycles of the secondary containers.

In one embodiment, the main volume is such that the sum of the secondary volumes of the secondary containers 3 is equal to or less than the main volume.

In one embodiment, the secondary container 3 comprises a secondary distribution device 6 configured to allow and/or prevent fluid communication between the environment outside of the secondary chamber and a secondary dispensing opening in communication with the secondary chamber, for example located at the end of a neck, preferably threaded, of the secondary container 2.

In one embodiment, the secondary distribution device 6 is a pump dispenser, for example manual or automated, operatively connected to the secondary chamber.

In one embodiment, the secondary distribution device 6 is a valve.

In one embodiment, the secondary distribution device 6 is a cap, such as a screw cap, a flip-top, or snap-on cap.

In one embodiment, the secondary distribution device 6 comprises a threaded attachment portion.

In one embodiment, the secondary distribution device 6 is configurable in a use configuration, in which the distribution or dispensing of consumable product from the secondary chamber to the outside is allowed, and is configurable in a refilling configuration, in which the entry of consumable product into the secondary chamber from the outside is allowed while remaining engaged with the secondary container 3, for example while remaining screwed to the neck of the secondary container 2.

In one embodiment, the secondary container 3 comprises one or more indication elements, for example a thickened or raised notch on an outer surface of the secondary container, to indicate the level of consumable product in the secondary chamber, corresponding to the indication of the possible, required or suggested filling level of the secondary container. Preferably, the indication elements are positioned so as to indicate a volume of 1.5 liters therebetween or with respect to the bottom of the secondary container.

According to the invention, the tracking device 4 comprises a plurality of recognition elements 45, each provided with a recognition code 43 that identifies the consumable product.

Preferably, the recognition code 43 identifies the consumable product contained or intended to be in the main chamber of the main container 2.

In the discussion, "recognition code" means a set of conventional markings that allows for the unambiguous identification of the consumable product. In particular, the recognition code allows the unambiguous identification of a production batch of a consumable product. In other words, the recognition code makes it possible to track the characteristics of its production (for example, day, place, type of production process).

In one embodiment, the recognition code comprises or consists of a numeric code.

In one embodiment, the recognition code comprises or consists of an alphabetical code.

In one embodiment, the recognition code comprises or consists of a figurative code, for example based on figures or symbols.

In one embodiment, the recognition code comprises or consists of a barcode.

In one embodiment, the recognition code comprises or consists of a color code.

In one embodiment, the identification code comprises or consists of a QR code.

In one embodiment, the recognition code comprises or consists of a tactile code, for example based on low-reliefs.

In one embodiment, the recognition code comprises or consists of unambiguous symbols according to a raised tactile reading and writing system for the visually impaired and the blind, for example according to the Braille language.

In one embodiment, the recognition code comprises or consists of a compound that reflects light visible to the naked eye. For example, in one embodiment, the recognition code is made of graphite or ink, for example printed or written in ink.

In one embodiment, the recognition code comprises or consists of a compound that reflects light outside the visible spectrum, i.e., outside the range of 380-750 nm. For example, in one embodiment, the recognition code is made with reversible invisible ink or with ultraviolet light-sensitive ink.

According to the invention, the recognition element 45 is engaged with the main container 2 in a separable manner, and is configured or configurable to engage a secondary container 3 when it is disengaged from the main container 2.

Preferably, the separation from the main container 2 and/or the engagement with the secondary container 3 may be achieved manually, by the action of an operator tasked with refilling the secondary container 3.

In one embodiment, the recognition element 45 is a predominantly planar element, for example made of a plastic material or a cellulose or paper-based material.

In a preferred embodiment, the recognition element 45 is a plate.

In one embodiment, the recognition element 45 is a label, for example adhesive or double-adhesive.

In one embodiment, the tracking device 4 comprises a plurality of recognition elements 45, each provided with the recognition code 43 which identifies the consumable product, e.g., contained or intended to be contained in the main chamber of the main container 2.

In one embodiment, the recognition elements 45 are in a number equal to or greater than the number of filling cycles of the at least one secondary container 3.

In one embodiment, the number of recognition elements 45 is calculated, approximating by default, by dividing the main volume of the main container 2 by the secondary volume of the secondary container 3.

In one embodiment, the secondary container 3 is intended to perform a predefined maximum number of filling cycles of the secondary chamber, for example following the substantial emptying of the secondary chamber or after a predefined number of distribution cycles of consumer product to the end user or after a predefined period of time. Secondary container 3 is designed to perform at least two filling cycles of the secondary chamber, i.e. it is not a single-use container. Therefore, the secondary container 3 includes a tracking region 30 configured to accommodate at least two recognition elements 45.

In one embodiment, the secondary container 3 comprises a tracking region 30 configured to accommodate a predefined maximum number of recognition elements 45 equal to the predefined maximum number of filling cycles.

In one embodiment, the tracking region 30 comprises predefined seats, e.g., special fields, e.g., numbered, for engaging the recognition elements 45.

In one embodiment, the tracking region 30 is a free region of the secondary container 3 suitable for accommodating the recognition elements 45.

Upon reaching the maximum number of filling cycles, the secondary container 3 must be temporarily or permanently decommissioned, i.e., it may not be reused for the distribution of consumable product to the end user, for example it must be washed or sanitized or it must be disposed of.

For example, in one embodiment, the secondary container 3 is intended to perform a maximum of five filling cycles of the secondary chamber. In this embodiment, the tracking region 30 is configured to accommodate a maximum of five recognition elements 45.

In one embodiment, the recognition element 45 is engaged to the main container 2 by snap coupling or by shape or force coupling or by gluing.

In one embodiment, the recognition element 45 is engaged with the main container 2 by means of a support 41 engaged and intended to remain engaged with the main container 2.

For example, in one embodiment, the support 41 is glued or welded to the main container 2. For example, the support 41 is a tag holder or a base sheet with which the recognition element 45 is reversibly engaged or engageable, for example from which the recognition element 45 is mechanically separable.

In one embodiment, the support 41 is made integrally, i.e., in a single piece, with the container walls of the main container 2, for example in plastics materials by a co-molding or injection or casting molding process.

In one embodiment, the recognition element 45 is engaged to the support 41 by snap coupling or by shape or force coupling or by gluing.

In one embodiment, the recognition element 45 is engaged with the support 41 or with the main container 2 by means of a tearable portion, for example by manual action of the operator tasked with refilling, for example the recognition element 45 comprises a weakened portion.

In one embodiment, the recognition element 45 is configured or configurable to engage the secondary container 3 by gluing or by means of a snap coupling or a shape or force coupling.

In an initial state of the recognition element 45, the recognition element 45 is engaged with the main container 2, either directly or through the support 41. In an intermediate state of the recognition element 45, the recognition element 45 is disengaged from the main container 2 or from the support 41. In a final state of the recognition element 45, the recognition element 45 is engaged with the secondary container.

In one embodiment, the recognition element 45 in the intermediate state is unsuitable for engagement with the secondary container 3, for example insofar as it comprises a removable adhesive covering layer that externally covers an adhesive connection portion. Starting from the intermediate state, the recognition element 45 is configurable in a second intermediate state, in which it is suitable for engagement with the secondary container 3, for example by removing the outer adhesive covering layer and uncovering the adhesive connection portion.

In one embodiment, the main container 2 comprises a main distribution device 5 engaged with the main container 2, configured to allow and/or prevent fluid communication between the environment outside of the main chamber and a dispensing opening in communication with the main chamber, for example located at the end of a neck, preferably threaded, of the main container 2.

In one embodiment, the main distribution device 5 is a pump dispenser, for example manual or automated, fluidly connected to the main chamber.

In one embodiment, the main distribution device 5 is a valve.

In one embodiment, the main distribution device 5 is a cap.

In one embodiment, the main distribution device 5 comprises a threaded attachment portion.

In one embodiment, the main distribution device 5 comprises at least one auxiliary recognition element 55 suitable for identifying the number of times the main distribution device 5 has been removed from a main container 2 and applied to another main container 2.

Preferably, the auxiliary recognition element 55 is engaged with the main distribution device 5 in a separable or deformable or tearable or pierceable or otherwise breakable manner, to visually signal to the operator a change in the state of use of the main distribution device 5.

In one embodiment, the auxiliary recognition element 55 is provided with an auxiliary recognition code that identifies the number of times the main distribution device 5 has been removed from a main container 2 and engaged with another main container 2.

In one embodiment, the main distribution device 5 is intended to be reused a predefined maximum number of reuses, i.e., a maximum number of times wherein the main distribution device 5 has been removed from a main container 2 and engaged with another main container 2.

Upon reaching the maximum number of filling cycles, the main distribution device 5 must be temporarily or permanently decommissioned, i.e., it may not be reused for the distribution of consumable product from the main chamber, e.g., it must be washed or sanitized or it must be disposed of.

In one embodiment, the main distribution device 5 comprises a number of auxiliary recognition elements 55 in a number equal to the maximum number of reuses of the main distribution device 5.

The characteristics of the recognition element 45 associated with the consumable product described above are also applicable to the auxiliary recognition element 55.

The characteristics of the recognition code 43 associated with the consumable product described above are also applicable to the auxiliary recognition code associated with the distribution device.

In one embodiment, the main distribution device 5 comprises an auxiliary support body 59, for example planar in shape, such as made of paper or plastics or metal, on which the auxiliary recognition elements 55 are identified (printed, drawn, or folded) in the form of regions of the auxiliary support body 59 capable of being separated, ripped, torn, pierced, or deformed. Preferably, the auxiliary support body 59 is supported by the main distribution device 5, for example by a suction tube 51 of the manual pump.

Following a filling of the secondary chamber of the secondary container 3 with consumable product coming from the main container 2, the operator tasked with refilling operations separates, tears, deforms, rips, or pierces an auxiliary recognition element 55. Before the secondary chamber of the secondary container 3 is filled with the consumable product coming from the main container 2, if auxiliary recognition elements 55 to be torn or ripped are no longer available, the operator tasked with refilling operations does not perform the filling and instead decommissions the main distribution device 5.

In one embodiment, the main container 2 comprises a handle 20 that may be used by the operator tasked with refilling the secondary container 3 to incline the main container 2, facilitating the exit of consumable product from the main chamber, for example through the dispensing opening.

According to the invention, the method for tracking the distribution of consumable product involves the use of the tracking system.

The method for tracking the distribution of consumable product provides for separating a recognition element 45 from the main container 2 and engaging it with the secondary container 3, following a filling of the secondary chamber of the secondary container 3 with consumable product coming from the main chamber of the main container 2.

In one embodiment, the method for tracking the distribution of consumable product provides for separating the main distribution device 5 from the main container 2; engaging the main distribution device 5 with a second main container 2; and separating an auxiliary recognition element 55 from the main distribution device 5 following the engagement of the main distribution device 5 with the second main container 2 or separating an auxiliary recognition element 55 from the main distribution device 5 before the engagement of the main distribution device 5 with the second main container 2.

Preferably, the separation of the main distribution device 5 from the main container 2 is to be carried out following the complete emptying of the main container 2 or after a predefined period of time or after a predefined number of distribution cycles of consumable product coming from the main chamber.

Preferably, the second main container 2 lacks a main distribution device 5, for example it comprises a guarantee cap that is removable before engaging the main distribution device 5.

Preferably, the second main container 2 contains consumable product in its main chamber.

In one embodiment, the method for tracking the distribution of a consumable product provides for decommissioning the main distribution device 5 if the separate main distribution device 5 to be separated from the main container 2 has no auxiliary recognition elements 55.

Innovatively, the system for tracking the distribution of consumable product and the method for tracking the distribution of consumable product fulfill the intended objects.

Advantageously, it is possible to track the origin of the refilled consumable product in a given container in a certain and reliable manner.

Advantageously, maximum safety is ensured for the consumer.

Advantageously, it is possible to cope with critical situations attributable to the consumption of consumable product, for example in the case of an allergic reaction, contamination of consumable product during distribution operations between containers, or in the case of accidental ingestion of consumable product.

Advantageously, it is possible to comply with the obligations imposed by the regulations relating to monitoring and distribution of consumable product and relating to refillable containers.

Advantageously, it is possible to monitor the life of the container or containers that are part of the tracking system.

Advantageously, the tracking system allows an ecological use of the containers, ensuring the level of safety required by the regulations.

Advantageously, compared with the same safety conditions ensured in the distribution chain of consumable product, the tracking system is more ecological.

Advantageously, it is possible to monitor the consumable product mix contained within a secondary container, since with each partial filling of the secondary chamber with a different batch of consumable product, a recognition element is engaged with such a secondary container.

Advantageously, it is possible to obtain the desired constant level of consumable product within a secondary container, ensuring maximum safety and traceability conditions.

Advantageously, the operators responsible for distributing consumable product and managing containers have at their disposal a structurally simple tracking system, as it comprises a limited number of components, and a highly intuitive tracking method, repeatable on a large scale and error-proof.

Advantageously, the main container has a lower ecological impact, since it has a lower impact by weight on the contained consumable product. The design of the packaging allows this ratio to be further improved; since the main container does not have an aesthetic function, it may therefore have larger dimensions that are typically not suitable for distribution to the end user.

It is clear that a person skilled in the art may make changes to the invention described above in order to meet incidental needs, which changes all fall within the scope of protection as defined in the following claims.

## Claims

1. A tracking system (1) of the distribution of a cosmetic product, comprising:
- a main container (2) provided with a main chamber having a main volume to contain or containing a stock of cosmetic product;
wherein the main container (2) comprises a tracking device (4) comprising a plurality of recognition elements (45), each provided with a recognition code (43) which identifies the cosmetic product;
wherein the recognition element (45) is separably engaged with the main container (2) and is configured or configurable to engage a secondary container (3), when it is disengaged from the main container (2).

2. Tracking system (1) according to claim 1, comprising at least a secondary container (3) provided with a secondary chamber having a secondary volume smaller than the main volume to contain or containing a cosmetic product, wherein the secondary container (3) is intended to perform cycles of filling the secondary chamber for a predefined maximum number of filling cycles, and comprises a tracking region (30) configured to contain a predefined maximum number of recognition elements (45), said maximum number of recognition elements (45) being equal to the predefined maximum number of filling cycles.

3. Tracking system (1) according to claim 2, wherein said secondary container (3) is designed to perform at least two filling cycles of the secondary chamber, said secondary container (3) comprising a tracking region (30) configured to contain at least two recognition elements (45).

4. Tracking system (1) according to any one of the preceding claims, wherein the recognition element (45) is engaged with the main container (2) by means of a snap coupling, or a shape or force coupling, or is glued to the main container (2) or is made in a single piece with the main container (2).

5. Tracking system (1) according to any one of the preceding claims, wherein the recognition element (45) is engaged with the main container (2) by means of a support (41) engaged and intended to remain engaged with the main container (2).

6. Tracking system (1) according to any one of the preceding claims, wherein the recognition element (45) is configured or configurable to engage the secondary container (3) by gluing or by means of a snap coupling or a shape or force coupling.

7. Tracking system (1) according to any one of the preceding claims, wherein the main container (2) comprises a main distribution device (5) engaged with the main container (2), wherein the main distribution device (5) comprises at least one auxiliary recognition element (55) engaged with the main distribution device (5), wherein the auxiliary recognition element (55) is separable from the main distribution device (5) or tearable or deformable or pierceable or breakable, to visually identify a number of times in which the main distribution device (5) has been removed from a main container (2) and applied to another main container (2).

8. A main distribution device (5) engageable to a main container (2) of a tracking system (1) according to claim 7.

9. A method of tracking the distribution of a cosmetic product, comprising the following steps:
A) providing a tracking system (1) according to any one of claims 1 to 7, wherein the main container (2) contains a cosmetic product;
B) separating a recognition element (45) from the main container (2) and engaging it with a secondary container (3) following a filling of the secondary chamber of the secondary container (3) with the cosmetic product from the main container (2).

10. A method of tracking a secondary container, comprising the following steps:
A) providing a tracking system (1) according to any of claims 2 to 7, including a plurality of secondary containers (3);
B) selecting a secondary container (3);
wherein, if the tracking region (30) of the secondary container (3) contains a number of recognition elements (45) less than the maximum number of recognition elements (45), then:
C) filling the secondary chamber of the secondary container (3) with cosmetic product from the main container (2), and
D) separating one recognition element (45) from the main container (2) and engaging it to the tracking region (30) of the secondary container (3);
wherein, if the tracking region (30) of the secondary container (3) contains recognition elements (45) in the same number as the maximum number of recognition elements (45), then dismissing the secondary container (3).

11. A method of tracking a main distribution device, comprising the following steps:
A) providing a tracking system (1) according to claim 7;
B) separating the main distribution device (5) from the main container (2);
wherein, if the main distribution device (5) is provided with at least one auxiliary recognition element (55), then:
C) engaging the main distribution device (5) with a second main container (2); and
D) separating or ripping or tearing or piercing or deforming an auxiliary recognition device (55), following or prior to the engagement of the main distribution device (5) with the second main container (2);
wherein, if the main distribution device (5) has no auxiliary recognition elements (55), then dismissing the main distribution device (5).
